# EUROPEAN PATENT SPECIFICATION

(11) **EP 3 521 723 B1**
(45) Date of publication and mention of the grant of the patent: **02.07.2025**
(21) Application number: 18155335.5
(22) Date of filing: 06.02.2018
(51) Int. Cl.: F24F 11/52, G03B 21/10, G03B 21/62

(54) **ROOM ATMOSPHERE FUNCTION HANDLING IN A BUILDING**
RAUMATMOSPHÄRENFUNKTIONSHANDHABUNG IN EINEM GEBÄUDE
MANIPULATION DE FONCTION D'ATMOSPHÈRE AMBIANTE DANS UN BÂTIMENT

(43) Date of publication of application: 07.08.2019
(73) Proprietor: ABB Schweiz AG, 5400 Baden (CH)
(72) Inventor: GOPALAKRISHNAN, Gayathri, 141 52 Huddinge (SE); ZORIC, Goranka, 725 91 Västerås (SE); DOMOVA, Veronika, 722 10 Västerås (SE)
(74) Representative: Kransell & Wennborg KB

(56) References cited:
- EP-A1- 3 258 316
- WO-A1-2015/065490
- CN-A- 106 679 074
- US-A1- 2005 064 936
- US-A1- 2014 277 756

## Description

### TECHNICAL FIELD

The invention relates to the handling of room atmosphere functions in a building. More particularly, the invention relates to a room atmosphere handling arrangement for provision in a building automation system, a building automation system as well as a method and computer program product for projecting information associated with a manoeuvrable actuating element of the room atmosphere handling arrangement.

### BACKGROUND

The evolution of building automation has led to a significant increase in the number of features and functions that adorn every room. Unfortunately, there is a disproportionate lag in the advancements in interfaces that enable the control of these complex functions. In majority of the cases, the interfaces that are available to the users to control these functions are limited to wall switches, complex wall mounted control panels or mobile devices at best. All of these suffer from drawbacks such as poor usability, high cognitive load or limited features.

A room atmosphere handling arrangement according to the preamble of claim 1 is known from document CN 1066 79074 A.

Some interesting studies have been made in other areas.

In "Venice Unfolding: A Tangible User Interface for Exploring Faceted Data in a Geographical Context", by Till Nagel, Frank Heidmann, Massimiliano Condotta and Erik Duval, Proceedings of the 6th Nordic Conference on Human-Computer Interaction, Reykjavik, Iceland, October 2010 there is described the use of a polyhedral object to browse data of a large display to enable the exploration of architectural projects in Venice. Data is presented on the display around the polyhedral object and selected through tilting of the polyhedral object.

In "Interaction and Presentation Techniques for Shake Menus in Tangible Augmented Reality", by Sean White, David Feng and Steven Feiner, 8th IEEE International Symposium on Mixed and Augmented Reality, ISMAR 2009, there is a discussion about the design space of shake menus, which are intended for use in tangible augmented reality, where a shake menu is a radial menu displayed centred on a physical object and activated by shaking that object.

Although these studies are interesting, they are not easily implemented in or translated into a building automation environment.

There is thus a need for a more user-friendly way of actuating functions in a building automation environment.

The present invention is directed towards one or more of the above-mentioned problems.

### SUMMARY

One object of the invention is therefore to provide a more user friendly implementation of functions of building automation system.

The invention provides a room atmosphere handling arrangement according to claim 1, a method for projecting information according to claim 11 and a computer program product according to claim 14.

The invention has a number of advantages. It provides a user interface that is originally simple but that can easily be transformed into a more advanced one if it is needed. Thereby a good balance between richness in functionality and ease of use is provided. It ensures that a user is not overwhelmed by a complex array of choices and can always accomplish his or her end goal with relative ease. It also offers the flexibility of a digital interface, such as a touch screen, on a physical device, like a switch, without the cons associated with a digital interface.

The atmosphere of a room is the atmosphere as experienced by a user, i.e. the user experience of the room, such as the user experience caused by illumination achieved using light sources and blinds, heating, ventilation, air-conditioning etc.

A manoeuvrable actuation element may be a switch, such as a so-called dimmer switch with a variable resistance, with functionality to enable registration of movement of the element along a movement path.

An options selection actuation is an actuation of the manoeuvrable actuation element for obtaining a number of options that can be implemented. These options can be selectable atmosphere functions, settings of atmosphere functions, as well as moving backwards and forwards between the options, such as entering, navigating through and leaving a menu system.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a room with a light source and a room atmosphere handling arrangement for actuating the light source,
fig. 2 shows a front view of a projection surface and a first variation of the manoeuvrable actuating element of the atmosphere handling arrangement,
fig. 3 schematically shows a first realization of the atmosphere handling arrangement,
fig. 4a, 4b and 4c show the manoeuvrable actuating element and a projection surface of the atmosphere handling arrangement where no information, a first set of information and a second set of information are projected on the projection surface,
fig. 5 shows a flow chart of a number of steps in a method for projecting information associated with the manoeuvrable actuating element and being performed by the atmosphere handling arrangement,
fig. 6a, 6b and 6c show the manoeuvrable actuating element and the projection surface where alternative sets of information are projected on the projection surface,
fig. 7 shows a front view of a projection surface and a second variation of manoeuvrable actuating element of the atmosphere handling arrangement,
fig. 8 schematically shows a second realization of the atmosphere handling arrangement,
fig. 9 shows a number of method steps for determining if to allow projection of information being performed in the second realization of the atmosphere handling arrangement, and
fig. 10 a computer program product in the form of a CD ROM disc with a computer program performing the functionality of a control units of the atmosphere handling arrangement.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards the atmosphere of a room in a building that is influenced by a building automation system, which atmosphere is influenced through using room atmosphere functions in the system, such as functions that influence the light in the room such as the use of light sources or of blinds, heating and ventilation.

In order to enable this there is provided a room atmosphere handling arrangement, which is based on the use of a manoeuvrable actuation element for actuating one or more of the above-mentioned functions. The manoeuvrable actuating element may be a switch with variable resistance, for instance in the form of a dimmer switch. It may thus be a switch that may be operated for on/off functionality as well as for varying the on/off functionality using the variable resistance. It may also be a switch where it is possible to detect the length of time of the on/off actuation. It may thus allow a first type of actuation, such as the depression of a button or switch, that may be used for turning on and off of a corresponding basic atmosphere function. In this case it is also possible that the length of time of the first type of actuation may be detected and used. This is combined with a second type of actuation where the manoeuvrable actuation element is moved along a direction of movement.

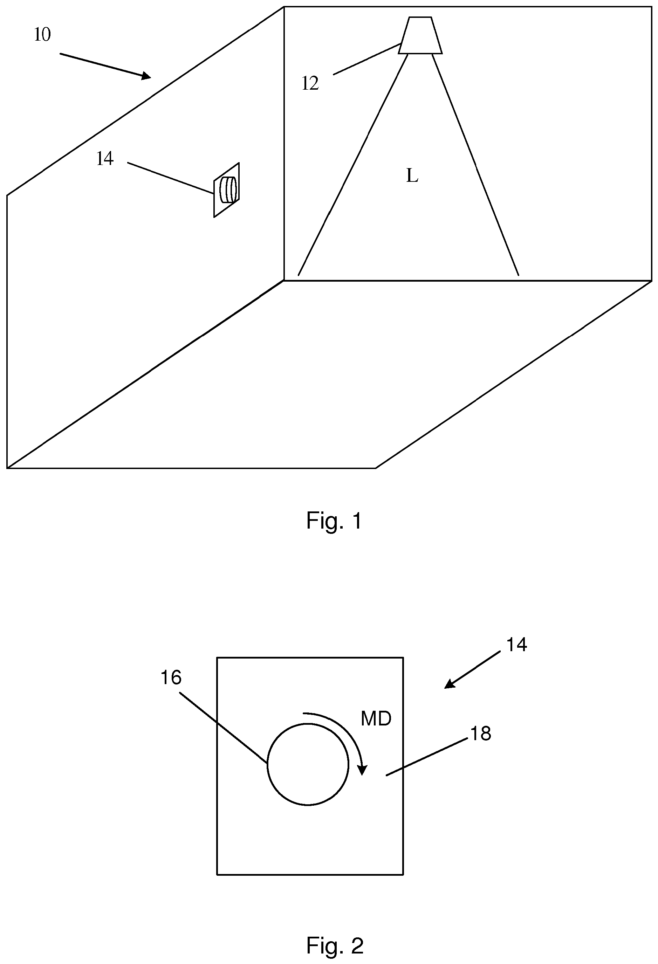

Fig. 1 schematically shows a room 10 comprising a number of walls and on one of these walls there is placed a room atmosphere handling arrangement 14. The room atmosphere handling arrangement 14 may thus be attached to the wall. As stated above the room atmosphere handling arrangement 14 is provided for influencing the atmosphere of the room and one way of doing this is in fig. 1 exemplified by a light source 12 emitting light L, which light source may be a lamp that is controlled for changing the illumination of the room.

Fig. 2 shows a front view of a projection surface and first variation of the manoeuvrable actuation element 16. As can be seen in fig. 2, the manoeuvrable actuation element 16 is placed above the information projection surface 18. This surface is provided for having one or more projectors project light on it in relation to the manoeuvrable actuation element 16. The surface may be a glass surface that is a part of the room atmosphere handling arrangement 14. It should however be realized that other types of surfaces may be contemplated. It may in some cases even be made up of the wall itself, which may advantageous if the wall is white and smooth.

The manoeuvrable actuation element 16 is furthermore moveable along a direction of movement MD. In this variation the manoeuvrable actuation element 16 is possible to turn around an axis of rotation and therefore the direction of movement MD is in this case a radial direction of movement.

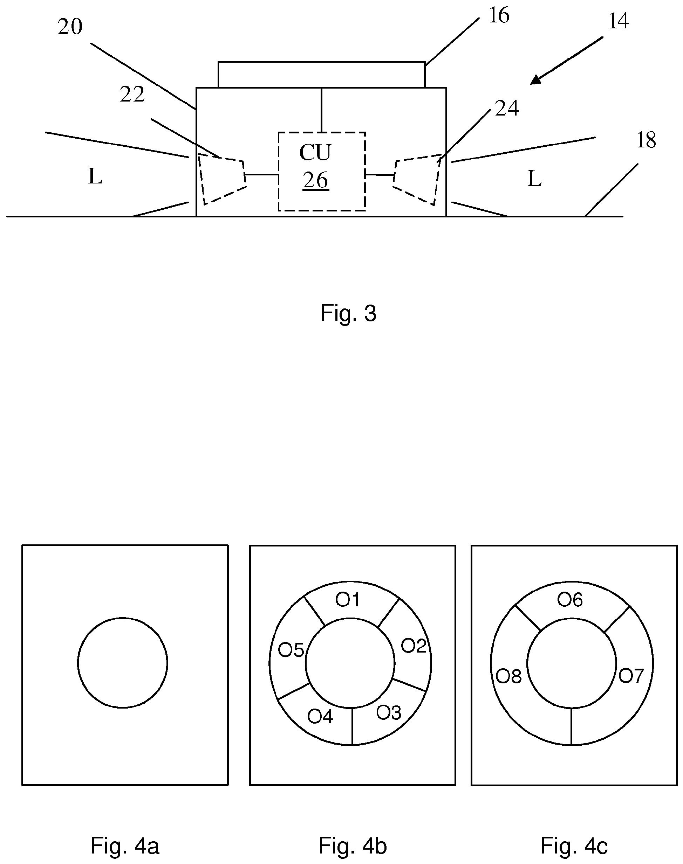

Fig. 3 schematically shows a first realization of the room atmosphere handling arrangement 14. In this first realization, the first variation of the manoeuvrable actuation element 16 is used. However, as can be seen later it is also possible to use other types of manoeuvrable actuation elements.

As can be seen in the figure, there is the manoeuvrable actuation element 16 and information projection surface 18. However, as can also be seen in the figure there is a projector housing 20 sandwiched between the manoeuvrable actuation element 16 and information projection surface 18. It can more particularly be seen that the projector housing 20 is placed on top of the information projection surface 18. The manoeuvrable actuation element 16 is also fixedly attached to the projector housing 20. It can not be removed from it. However, it may be moved in relation to the housing. It may for instance be depressed through an opening of the housing. It may also be rotated in relation to the housing for following the direction of movement. This movement along the direction MD is because of the housing 20 thus a movement above the information projection surface 18. It may for the same reason be a movement in a plane in parallel with the information projection surface 20.

The projector housing 20 comprises at least one projector and with advantage several for projecting information on the information projecting surface. The projectors may with advantage be pico projectors. As an example in the figure two projectors 22 and 24 are shown. Moreover, the projector housing 20 may have the shape of a cylinder or a cube and may also have at least one lateral wall that is perpendicular to the information projection surface 18, which in the case of a cylinder shape would be a cylinder wall and in the case of cube would be through for example four sides of the six cube sides. In this case there may be projection of light circumferentially around all the lateral walls of the manoeuvrable actuation element. Therefore, the lateral walls may also be provided with openings for the projectors. However, it is also possible that the lateral walls are transparent.

As can be seen the projectors are provided for projecting light L through the lateral wall(s) onto the information projection surface 18. In order to do this, they may more particularly be slightly inclined towards the information presentation surface 19.

Finally, there is a control unit CU 26 connected to the projectors 22 and 24 as well as to the manoeuvrable actuation element 16. The connections are with advantage electrical connections. The control unit 26 is in this variation included inside the projector housing. It should however be realized that it is as an alternative possible to place it outside of it.

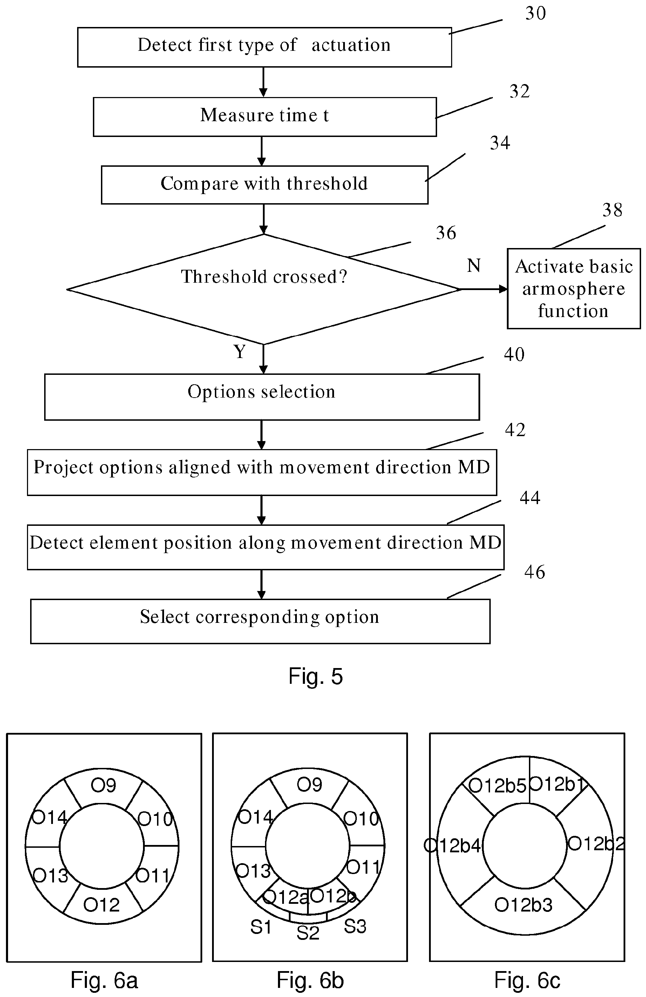

Now the operation of the first realization of the room atmosphere handling arrangement will be given with reference also being made to fig. 4a, 4b and 4c, which show three images of the manoeuvrable actuating element and the projection surface, as well as to fig. 5, which shows a flow chart of a number of method steps in a method for projection information associated with the manoeuvrable actuating element.

Improvement in building automation technology has resulted in function rich rooms with tens of parameters that can be controlled. A modern conference room may for instance be equipped with a heating and ventilation system, lighting system with dimmers or advanced features, access control, automatic blinds, scene settings, presentation and audiovisual controls. An increase in the number of functions that can be controlled for changing the atmosphere of the room also implies an increase in the need for diverse control interfaces.

The most common control interfaces currently available are limited to three categories.
a) Switches
b) Wall mounted control panels
c) Portable control such as remote and mobile phones

To provide users with the best experience, there is a need to strike a balance between richness in functionality and ease of use. Current interfaces fail to achieve such optimal balance.

The three categories of currently available control interfaces suffer from different drawbacks some of which are summarized below.

### a) Limited interaction possibilities:

Wall switches are the simplest and most preferred form of interaction. Their main limiting feature is that they afford only very few interactions. A standard switch can only be turned on or off.

### b) Too many controls lead to clutter:

With increase in functions, the number of switches needed to control the functions increases. This leads to a clutter of switches on the wall that are not easy to use. Users often have trouble understanding the function of each switch or control panel and thus resort to trial and error. This represents a significant waste of time and effort for the user and leaves them frustrated.

### c) Complexity of control:

Wall mounted control panels have been a popular alternative to switches. They avoid the clutter of switches and provide a single interface from which several functions can be controlled. In most cases these are touch screen panels or a combination of a touch screen panel and a few physical buttons. The major challenge presented by these controls is its complexity. It is difficult for users to navigate through the various options especially if their goal is as simple as turning the lights on.

### d) Ease of access:

Much like control panels, remotes and mobile apps offer wide possibilities for control. However, they lack the permanence and ease of use of wall switches. The portable devices also suffer from the drawback that they can easily be misplaced. Some users are also frustrated by having to download apps or by having to take their phones out for simple tasks.

The problem is that the existing control interfaces are not user-friendly. They are either too complicated for a user or too simple with not enough functionalities. Either a user is flooded with information and complicated selections or simple in use but with too little information and too few options for handling room atmosphere functions.

There is therefore a need to strike a balance between richness in functionality and ease of use.

This is addressed by the room atmosphere handling arrangement.

The manoeuvrable actuating element 16 is actuatable, i.e. it may be actuated, to activate a basic atmosphere function and is in the exemplifying realization the dimmer switch shown in fig. 2, where there is a first type of actuation, here in the form of a depressing of a button, which may be used for turning on and off of the corresponding basic atmosphere function, such as to turn on and off lights, on and off ventilation, on and off heating, raising or lowering of blinds etc. In this case it is also possible that the length of time of the depression may be detected and used. The manoeuvrable actuation element 16 may also be actuated with a second type of actuation, which in the first variation is through being turned for varying a variable resistance.

At the initial stage the situation depicted in fig. 4a is at hand; there is no information being projected on the information projection surface 18 by the projectors 22 and 24.

The operation starts by the control unit 26 detecting that an options selection is being made by a user via the manoeuvrable actuation element 16. It thus detects that the user selects to receive information about a number options that may be selected, which options may be a number of options regarding one atmosphere function, such as a number of lightning options. It may also be an option to select between different atmosphere functions, such as to select between lighting, ventilation and heating. It is here also possible with a combination of the two. As will be shown later it may also be a selection between different scenes.

That the user makes such a selection is in the described realization detected through analysing the first type of actuation, which in this case involves a detection of a depressing of the manoeuvrable actuation element 16. It should be realized that there may be alternative ways to make a detection of a user made options selection. It is for instance possible that the first type of actuation always involves such a user selection. It is also possible that the second type of actuation is used. The highest or lowest possible position along the movement direction may as an example be used. It is also possible that a combination is used. For instance, a highest or lowest position along the movement path together with a depression may be used to detect selection of presenting a number of options.

In the present example only the first type of actuation is used for determining that there is a user made options selection.

Therefore, the control unit 26 first detects that there is a first type of actuation, step 30, which in this case is a detection of a depressing of the manoeuvrable actuation element 16. The control unit 26 also measures the time t of the actuation, which in this case is the time of depression, i.e. how long it is being depressed, step 32.

The control unit 26 then compares this time t with an information presentation threshold, which threshold represents a time above or below which a triggering of a projection with information about options is to be made.

In case the time does not cross the threshold, step 36, then the control unit 26 activates the basic atmosphere function, step 38. In the example of fig. 1, this may involve turning on or off the light source 12.

However, if the threshold is crossed, step 36, then the control unit 26 determines that the user has made an options selection, step 40.

In this specific example this determination is made based on the detected time being longer then the time represented by the threshold.

The control unit 36 then controls the projectors 22 and 24 to project information about the different options on the information projection surface 18 aligned with the direction of movement of the manoeuvrable actuation element, step 42. In this example the options are projected radially around the manoeuvrable actuation element. This situation is shown in fig. 4b, where five different options O1, O2, O3, O4 and O₅ in a first set of options are shown.

The projection of an option may coincide with a range of positions along the movement directions. The control unit 26 may also have a storage where there is stored a mapping of the options to the range.

As the user is presented with the options he or she may then select one of them, which may be done through only employing the second type of actuation or a combination of the first and second types of actuation.

The control unit 26 may therefore detect movement of the manoeuvrable actuation element 16 using the second type of actuation to a positon along the movement direction MD, step 44.

It is possible that a selection only involves this actuation, perhaps together with the use of a time of inactivity in order to detect a selection of an option. As an alternative it is possible that the combination with the first type of actuation is used. This means that a selection is detected through the movement to a position along the movement direction MD followed by a depressing of the manoeuvrable actuation element.

After having detected the position of the manoeuvrable actuation element 16 along the movement direction MD, the control unit 26 then selects the option corresponding to the detected positon, step 46. This may involve looking in said storage and locating the selected option based on the mapping and perhaps also performing an activity associated with the option, such as setting and/or activating an atmosphere function. It may also involve a selection of seeing a number of further options.

It is in this case possible to provide a type of a menu system where there are a number of interconnected views, where the options include back and forward options. A forward option may in this case lead to a view of a following set of options, while a back option leads to a previous set of options. The first set will of course not comprise a back option, but only a returning to the non-projecting state, while the last set in a chain of sets will only comprise a back option but no forward option.

Fig. 4c shows a second set of options that have been presented after the selection of one of the options in the first set of options.

An exemplifying scenario according to above described example could be the following.

The manoeuvrable actuation element 16 is thus a switch similar to a dimmer that can be rotated. In its minimal state it can act like a wall switch for simple functions such as turning the lights on and off or for dimming the lights. A long press of the switch reveals a radial display of options around the switch.

Interaction with these options is possible by rotating the switch. For a better understanding, consider the following example:
1. A user walks into a conference room fitted with the room atmosphere handling arrangement 14.
2. Upon entering, she simply wants to turn the lights on. So, she uses the atmosphere handling arrangement 14 like a regular wall switch, see fig. 4a)
3. A while later, the user wants to turn the spot lights on in the room. She long presses the manoeuvrable actuation element to reveal five (or more) radial options. She rotates the switch such that the pointer is directed at the corresponding option, for instance presented as a spotlight icon, see figure 4b. She then presses the switch to select this option. This reveals another interface that allows the user to change the spotlight status by rotating the switch 16, see fig. 4c.

It can in this way be seen that the room atmosphere handling arrangement provides a user interface that is originally simple but that can easily be transformed into a more advanced user interface if it is needed. Thereby the room atmosphere handling arrangement provides a good balance between richness in functionality and ease of use.

The room atmosphere handling arrangement for home and building automation thus uses light projection technology.

As may be realized from fig. 4as, 4b and 4c above, the concept of progressive disclosure may be used for tangible interfaces, such as the manoeuvrable actuation element. Progressive disclosure is an interaction design technique often used in human computer interaction to help maintain the focus of a user's attention by reducing clutter, confusion, and cognitive workload. This improves usability and user satisfaction by presenting only the minimum data required for the task at hand.

The concept of progressive disclosure can also be combined with scenes. This means that a set of options may relate to a combination of atmosphere functions of the room. A scene may for instance be related to the type of activity to be had in the room 10, like a conference room, where for different activities in the room there may be different scenes involving different settings of the various atmosphere functions.

This is indicated in fig. 6a, 6b and 6c.

In a first set of options shown in fig. 6a, there is a ninth back option O9, a tenth discussion option O10, an eleventh entrance option O11, a twelfth collaboration option 012, a thirteenth presentation option 013 and an fourteenth Custom option O14. The discussion option may be a number of room atmosphere settings that are suitable when the room is to be used for a discussion between a limited number persons, such as two or three, the entrance option may be a set of room atmosphere settings suitable for being used upon entering a conference room, the collaboration option may be suitable for a small conference meeting between for instance five to ten persons, a presentation option may be a group of settings suitable for a presentation, such as a slide show presentation, and a custom option may involve custom room atmosphere function settings.

If then a user selects one of the options, for instance the collaboration option O12, she may then be presented with the image shown in fig. 6b, where the ninth, tenth, eleventh, thirteenth and fourteenth options are still displayed. However, two sub-options O12a and O12 of the collaboration option O12 are also shown together with three current or active settings S1, S2 and S3 of the Collaboration option O12.

Here a first sub-option O12a represents a selection of an application of the current settings S1, S2 and S3, while the second sub-option represents a selection of an editing of the settings.

A selection of the second sub-option 12b then leads to the set of options shown in fig. 6c, which shows a number of further sub-options O12b1, O12b2, O12b3, O12b4 and O12b5. The first of these O12b1 is a return back to the set of option in fig. 6b, while a second, third and fourth O12b2, O12b3 and O12b4 of the further sub-options involves changing of the settings S1, S2 and S3, respectively. The fifth O12b5 finally involves a saving of the settings.

It can thereby be seen that it is possible to easily change between scenes as well as to update the settings of a scene.

As was mentioned earlier, the manoeuvrable actuation element in fig. 2 is only one variation based on a radial dimmer switch.

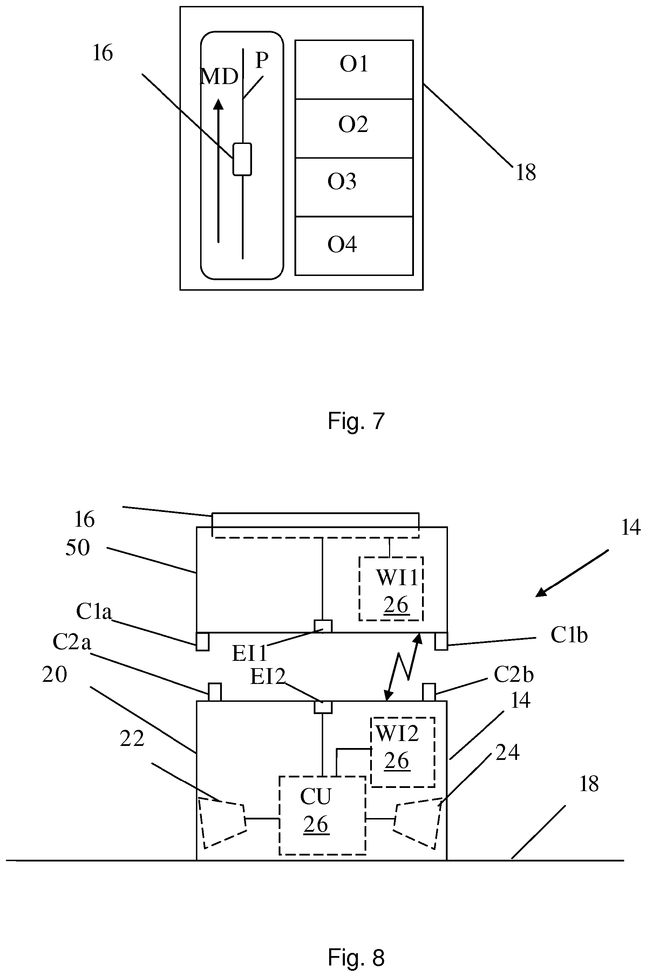

Another variation of the manoeuvrable actuation element 16 is shown in fig. 7. Here it is movable along an axial path P; the movement direction MD is thus axial. In this case a set of options is projected on the projection surface 18 in parallel with the axial path P. It can here be seen that in the variation of fig. 7, options are only projected on one side of the path P.

It is also possible to change the room atmosphere handling arrangement 14.

A second realization of the room atmosphere handling arrangement is schematically shown in fig. 8.

Also in this second realization, the first variation of the manoeuvrable actuation element 16 is used. However, it is also here possible to use other types of manoeuvrable actuation elements, such as the above-mentioned second variation of the manoeuvrable actuation element 16.

In this case the manoeuvrable actuation element 16 can be separated from the projector housing 20. Because of this there are two housings. This allows remote actuation of room atmosphere functions. However, such remote actuation is not necessarily desirable to combine with projection of information on the information projection surface 18. The second realization addresses this situation.

There is here a first housing 50 with the manoeuvrable actuation element 16 and a second housing that is the projector housing 20. In order to be able to releasably connect the first housing 50 to the second housing the first housing 50 is provided with a first mechanical connector and the second housing is equipped with a second mechanical connector that may be mated with the first mechanical connector to form a combined housing. The mechanical connectors may be provided in a number of different ways. In the example in fig. 8, the first mechanical connector may be provided as snap-in connections where one second mechanical connector element snaps into a corresponding first mechanical connector element or vice versa. As an example, the first connector may be provided with two receiving elements C1a and C1b on two opposing side walls of the first housing and into which receiving elements are snapped two corresponding mating elements C2a and C2b of the second connector provided on two opposite lateral walls of the second housing 20. It should be realized that a multitude of different realizations may be used, such as plug and socket type realisations.

Moreover, the first housing 50 comprises a first wireless interface WI1 and a first electrical interface EI1 and the second housing comprises a second wireless interface WI2 and a second electrical interface EI2, where the first and second electrical interfaces EI1 and EI2 form an electrical connection when the mechanical connectors are mated. The electrical interfaces thus obtain electric contact when the mechanical connectors are properly joined with each other.

The wireless interfaces may be set to communicate with each other according to a suitable wireless standard, preferably short-range, such as Bluetooth, Near Field Communication (NFC) or Radio-Frequency IDentification (RFID). Also, Wi-Fi, i.e. IEEE 802.11 is possible.

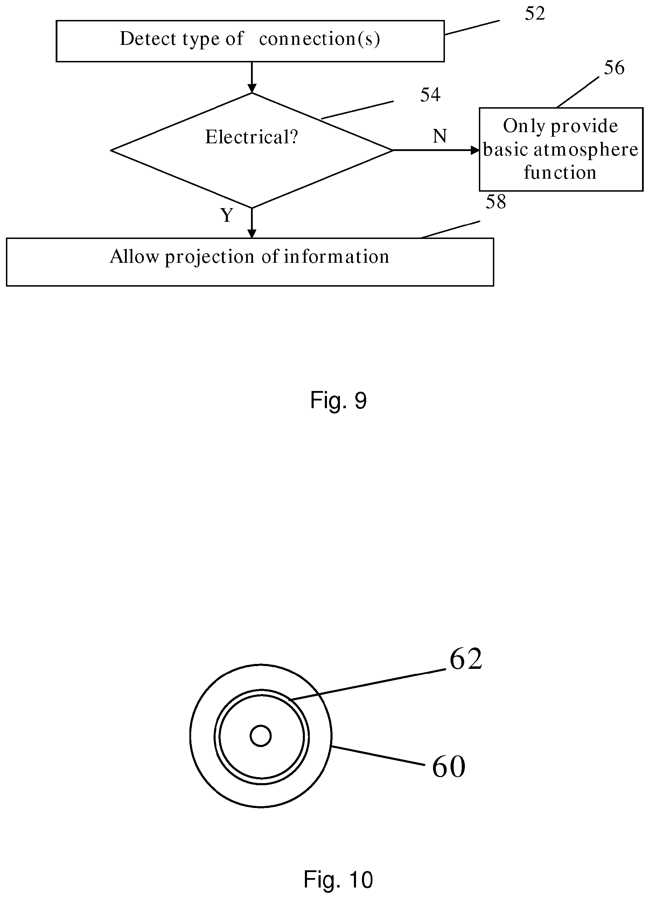

The operation of this arrangement in order to determine if to allow projection of information or not is shown in fig. 9.

In this case the control unit 26 first of all detects what types of connections exist between the two housings; electrical and/or wireless, step 52. This may be done through detecting that the second electrical interface EI2 is connected to first electrical interface EI1 and possibly also to detect that the second wireless interface WI2 can communicate with the first wireless interface WI1.

The control unit 26 will thereby find out if there is any electrical connection between the two housings 20 and 50.

If there is no electrical connection, step 54, then the control unit 26 only provides the basic room atmosphere function of the manoeuvrable actuation element 16, step 56. This means that even if the user for instance were to make a long depressing of the manoeuvrable actuation element 16, this would still not lead to any projection of the actuation options if the housings are separated.

However, if there is an electrical connection, step 54, the projection of information will be allowed, step 58. Thereby the functionality described earlier in relation to the first realization may be enabled.

Here it may be worth mentioning that this enabling of the projection of options would be possible also when there is no wireless connection.

Thereby it can be seen that the room atmosphere handling arrangement can be used either as a wall mounted interface or can be designed to be portable when necessary.

Further advantages of the room atmosphere handling arrangement are that it offers the flexibility of a digital interface on a physical device without the cons associated with a digital interface. The various options controlled can be customized to suit end users needs. The intuitiveness of the room atmosphere handling arrangement can also be enhanced by adding features such as colour coded operations. In extreme cases where end users are not allowed to control the room environment at great depth, it is also possible to ensure that the additional layer of information is available only to maintenance personnel while retaining the room atmosphere handling arrangement only providing the basic atmosphere function for end users. This would involve a validation mechanism where the users have to authenticate themselves before they are given access to advanced functions. Examples of such authentication are through using a finger print sensor on the switch or by entering a 4 or 6 digit pin.

There are a number of further advantages associated with the invention.
- Information on Demand: the room atmosphere handling arrangement presents information only on demand, it ensures that users don't anticipate frustration. Most controls that offer a good feature set present a screen. Even if the screen renders no information, many users expect complications the moment they see a screen. This implies that there is a cognitive load associated with having a screen that could frustrate users.
- Progressive Disclosure on Tangible Device: The concept of progressive disclosure has not been extensively explored for tangible devices despite being a common principle of digital interfaces.
- Mixed medium interface: The ability of the room atmosphere handling arrangement to act like a regular manoeuvrable actuation element ensures that even the most naive user can successfully perform basic tasks. The digital aspect ensures that the room atmosphere handling arrangement yields itself to more complex possibilities.
- Projected information aligned with direction of movement for function control: The aligning of projected information with the direction of movement of the room atmosphere handling arrangement ensures that all information at a particular depth are visible at once. There is no scrolling or panning.
- Improved customer/user satisfaction: The room atmosphere handling arrangement improves user and customer satisfaction by:
   ∘ Reducing users' cognitive demand and avoids frustration
   ∘ Providing better aesthetic value as compared to a clutter of switches or a control panel.
   ∘ Ease of use.

The control unit may be provided in the form of a processor with associated program memory including computer program code for performing its functionality. It may also be provided in the form of a digital signal processor (DSP) or Application Specific Integrated Circuit (ASIC) or Field-Programmable Gate Array (FPGA).

A computer program may also be a computer program product, for instance in the form of a computer readable storage medium or data carrier, like a CD ROM disc or a memory stick, carrying such a computer program with the computer program code, which will implement the functionality of the above-described control unit when being loaded into a processor. One such computer program product in the form of a CD ROM disc 60 with the above-mentioned computer program code 62 is schematically shown in fig. 10.

The invention is only to be limited by the following claims.

## Claims

1. A room atmosphere handling arrangement (14) for provision in a building automation system, the arrangement comprising:
a manoeuvrable actuation element (16) for influencing the atmosphere of a room (10) and being actuatable to activate a basic atmosphere function and moveable along a direction of movement (DM) above an information projection surface (18),
a projector housing (20) on top of the information projection surface (18) and comprising at least one projector (22, 24), and
a control unit (26) configured to detect a user made options selection actuation of the manoeuvrable actuation element (16) and control, based on said detection, the at least one projector (22, 24) to project information on the information projection surface (18) aligned with the direction of movement (DM) of the manoeuvrable actuation element, **characterised in that** the control unit (26) when controlling said at least one projector (22, 24) to project information is further configured to present information about a number of actuator options (O1, O2, O3, O4, O₅), detect the position of the actuation element (16) along the direction of movement (DM) and select an option corresponding to the detected position.

2. The room atmosphere handling arrangement (14) according to claim 1, wherein the projector housing (20) has a at least one lateral wall perpendicular to the projection surface (18), and said at least one projector (22, 24) is configured to project the information through said at least one lateral wall.

3. The room atmosphere handling arrangement (14) according to any previous claim, wherein the manoeuvrable actuation element (14) is a switch.

4. The room atmosphere handling arrangement (14) according to any previous claim, wherein the control unit (26) when detecting a user made options selection is configured to detect a first type of actuation, measure the time of the first type of actuation, compare the time with an information presentation threshold and select to project said information if the threshold is crossed and otherwise select the basic atmosphere function.

5. The room atmosphere handling arrangement (14) according to any previous claim, wherein the direction is radial and the control unit (26) is configured to control the at least one projector (22, 24) to project said information on the projection surface (18) around the manoeuvrable actuation element (16).

6. The room atmosphere handling arrangement (14) according to any of claims 1 - 4, wherein the manoeuvrable actuation element (16) is movable along an axial path (P) and the control unit (26) is configured to control the at least one projector (22, 24) to project said information on the projection surface (18) in parallel with the axial path (P).

7. The room atmosphere handling arrangement (14) according to any previous claim, wherein the manoeuvrable actuation element (16) is fixedly attached to the projector housing.

8. The room atmosphere handling arrangement (14) according to any of claims 1 -6, wherein the manoeuvrable actuation element (16) is provided in a first housing (50) comprising a first mechanical connector (C1a, C1b), where the projector housing (20) forms a second housing comprising a second mechanical connector (C2a, C2b) that may be mated with the first mechanical connector (C1a, C1b) to form a combined housing.

9. The room atmosphere handling arrangement according to claim 8, wherein the first housing (50) comprises a first wireless interface (WI1) and a first electrical interface (EI₁) and the second housing comprises a second wireless interface (WI₂) and a second electrical interface (EI₂), where the first and second electrical interfaces form an electrical connection when the mechanical connectors (C1a,C1b C2a, C2b) are mated, and the control unit (26) is only configured to provide the information for being projected if detecting that the first and second electrical interfaces (EI1, EI2) are electrically connected and otherwise to only provide the basic atmosphere function.

10. A building automation system comprising a room atmosphere handling arrangement (14) according to any previous claim.

11. A method for projecting information associated with a manoeuvrable actuation element (16) of a room atmosphere handling arrangement (14) in a building automation system, the room atmosphere handling arrangement (14) comprising a projector housing (20) on top of an information projection surface (18) and where the manoeuvrable actuation element (16) may be actuated to activate a basic atmosphere function and is moveable along a direction of movement (DM) above the information projection surface (18), the method being performed in a control unit (26) of the room atmosphere handling arrangement (14) and comprising the steps of:
detecting (30, 32, 34) a user made options selection actuation of the manoeuvrable actuation element (16), and
controlling (40), based on said detection, the at least one projector (22, 24) to project information on the information projection surface (18) aligned with the direction of movement (DM) of the manoeuvrable actuation element,
**characterised in that** the controlling of said at least one projector (22, 24) to project information comprises presenting information about a number of actuator options (O1, O2, O3, O4, O₅) and further comprising detecting (42) the position of the actuation element (16) along the direction of movement (DM) and selecting (44) an option corresponding to the detected position.

12. The method according to claim 11, wherein the detecting of a user made options selection comprises detecting a first type of actuation, measuring (32) the time of the first type of actuation, comparing (34) the time with an information presentation threshold, selecting to project (40) said information if the threshold is crossed (36) and otherwise selecting (38) the basic atmosphere function of the manoeuvrable actuation element.

13. The method according to claim 11 or 12, wherein the manoeuvrable actuation element (14) may be electrically and/or wirelessly connected to the projector housing, the method further comprising detecting (52) type of connection between the manoeuvrable actuation element (14) and the projector housing (20) and only (58) projecting information if (54) there is an electrical connection and otherwise to only provide the basic atmosphere function.

14. A computer program product for projecting information associated with a manoeuvrable actuation element (16) of a room atmosphere handling arrangement (14) in a building automation system, the room atmosphere handling arrangement (14) comprising a projector housing (20) on top of the information projection surface (18) and where the manoeuvrable actuation element (16) may be actuated to activate a basic atmosphere function and is moveable along a direction of movement (DM) above the information projection surface (18), the computer program product comprising computer program code (62) which when run in a control unit (26) of the room atmosphere handling arrangement (14), causes the control unit (26) to:
detect a user made options selection actuation of the manoeuvrable actuation element (16), and
control, based on said detection, the at least one projector (22, 24) to project information on the information projection surface (18) aligned with the direction of movement (DM) of the manoeuvrable actuation element,
wherein the control unit (26) when controlling said at least one projector (22, 24) to project information is further caused to present information about a number of actuator options (O1, O2, O3, O4, O5), detect the position of the actuation element (16) along the direction of movement (DM) and select an option corresponding to the detected position.

## Patentansprüche

1. Raumatmosphärenhandhabungsanordnung (14) zur Bereitstellung in einem Gebäudeautomatisierungssystem, wobei die Anordnung Folgendes umfasst:
ein manövrierbares Betätigungselement (16) zum Beeinflussen der Atmosphäre eines Raumes (10) und das betätigbar ist, um eine Atmosphärenbasisfunktion zu aktivieren, und entlang einer Bewegungsrichtung (DM) über einer Informationsprojektionsfläche (18) beweglich ist,
ein Projektorgehäuse (20), das sich auf der Informationsprojektionsfläche (18) befindet und mindestens einen Projektor (22, 24) umfasst, und
eine Steuereinheit (26), die dazu ausgelegt ist, eine von einem Benutzer vorgenommene Optionsauswahlbetätigung des manövrierbaren Betätigungselements (16) zu detektieren und basierend auf der Detektion den mindestens einen Projektor (22, 24) zu steuern, um Informationen auf die Informationsprojektionsfläche (18) zu projizieren, die mit der Bewegungsrichtung (DM) des manövrierbaren Betätigungselements ausgerichtet ist, **dadurch gekennzeichnet, dass** die Steuereinheit (26) beim Steuern des mindestens einen Projektors (22, 24), um Informationen zu projizieren, ferner dazu ausgelegt ist, Informationen über eine Anzahl von Aktuatoroptionen (O1, O2, O3, O4, O5) darzustellen, die Position des Betätigungselements (16) entlang der Bewegungsrichtung (DM) zu detektieren und eine Option auszuwählen, die der detektierten Position entspricht.

2. Raumatmosphärenhandhabungsanordnung (14) nach Anspruch 1, wobei das Projektorgehäuse (20) mindestens eine laterale Wand senkrecht zu der Projektionsfläche (18) aufweist und der mindestens eine Projektor (22, 24) dazu ausgelegt ist, die Informationen durch die mindestens eine laterale Wand zu projizieren.

3. Raumatmosphärenhandhabungsanordnung (14) nach einem der vorhergehenden Ansprüche, wobei das manövrierbare Betätigungselement (14) ein Schalter ist.

4. Raumatmosphärenhandhabungsanordnung (14) nach einem der vorhergehenden Ansprüche, wobei die Steuereinheit (26) beim Detektieren einer von einem Benutzer vorgenommenen Optionsauswahl dazu ausgelegt ist, eine erste Art von Betätigung zu detektieren, die Zeit der ersten Art von Betätigung zu messen, die Zeit mit einem Informationsdarstellungsschwellenwert zu vergleichen und ein Projizieren der Informationen auszuwählen, wenn der Schwellenwert überschritten wird, und andernfalls die Atmosphärenbasisfunktion auszuwählen.

5. Raumatmosphärenhandhabungsanordnung (14) nach einem der vorhergehenden Ansprüche, wobei die Richtung radial ist und die Steuereinheit (26) dazu ausgelegt ist, den mindestens einen Projektor (22, 24) zu steuern, um die Informationen auf die Projektionsfläche (18) um das manövrierbare Betätigungselement (16) herum zu projizieren.

6. Raumatmosphärenhandhabungsanordnung (14) nach einem der Ansprüche 1-4, wobei das manövrierbare Betätigungselement (16) entlang eines axialen Pfads (P) beweglich ist und die Steuereinheit (26) dazu ausgelegt ist, den mindestens einen Projektor (22, 24) zu steuern, um die Informationen auf die Projektionsfläche (18) parallel zu dem axialen Pfad (P) zu projizieren.

7. Raumatmosphärenhandhabungsanordnung (14) nach einem der vorhergehenden Ansprüche, wobei das manövrierbare Betätigungselement (16) fest an dem Projektorgehäuse angebracht ist.

8. Raumatmosphärenhandhabungsanordnung (14) nach einem der Ansprüche 1-6, wobei das manövrierbare Betätigungselement (16) in einem ersten Gehäuse (50) bereitgestellt ist, das einen ersten mechanischen Verbinder (C1a, C1b) umfasst, wobei das Projektorgehäuse (20) ein zweites Gehäuse bildet, das einen zweiten mechanischen Verbinder (C2a, C2b) umfasst, der mit dem ersten mechanischen Verbinder (C1a, C1b) zusammengefügt werden kann, um ein kombiniertes Gehäuse zu bilden.

9. Raumatmosphärenhandhabungsanordnung nach Anspruch 8, wobei das erste Gehäuse (50) eine erste drahtlose Schnittstelle (WI1) und eine erste elektrische Schnittstelle (EI1) umfasst und das zweite Gehäuse eine zweite drahtlose Schnittstelle (WI2) und eine zweite elektrische Schnittstelle (EI2) umfasst, wobei die erste und die zweite elektrische Schnittstelle eine elektrische Verbindung bilden, wenn die mechanischen Verbinder (C1a, C1b C2a, C2b) zusammengefügt sind, und die Steuereinheit (26) nur dann dazu ausgelegt ist, die Informationen zum Projizieren bereitzustellen, wenn detektiert wird, dass die erste und die zweite elektrische Schnittstelle (EI1, EI2) elektrisch verbunden sind, und ansonsten nur die Atmosphärenbasisfunktion bereitzustellen.

10. Gebäudeautomatisierungssystem, das eine Raumatmosphärenhandhabungsanordnung (14) nach einem der vorhergehenden Ansprüche umfasst.

11. Verfahren zum Projizieren von Informationen, die mit einem manövrierbaren Betätigungselement (16) einer Raumatmosphärenhandhabungsanordnung (14) in einem Gebäudeautomatisierungssystem assoziiert sind, wobei die Raumatmosphärenhandhabungsanordnung (14) ein Projektorgehäuse (20) auf einer Informationsprojektionsfläche (18) umfasst und wobei das manövrierbare Betätigungselement (16) betätigt werden kann, um eine Atmosphärenbasisfunktion zu aktivieren, und entlang einer Bewegungsrichtung (DM) über der Informationsprojektionsfläche (18) beweglich ist, wobei das Verfahren in einer Steuereinheit (26) der Raumatmosphärenhandhabungsanordnung (14) durchgeführt wird und die folgenden Schritte umfasst:
Detektieren (30, 32, 34) einer von einem Benutzer vorgenommenen Optionsauswahlbetätigung des manövrierbaren Betätigungselements (16), und
Steuern (40), basierend auf der Detektion, des mindestens einen Projektors (22, 24), um Informationen auf die Informationsprojektionsfläche (18) zu projizieren, die mit der Bewegungsrichtung (DM) des manövrierbaren Betätigungselements ausgerichtet ist, **dadurch gekennzeichnet, dass** das Steuern des mindestens einen Projektors (22, 24), um Informationen zu projizieren, Darstellen von Informationen über eine Anzahl von Aktuatoroptionen (O1, O2, O3, O4, O5) umfasst und ferner Detektieren (42) der Position des Betätigungselements (16) entlang der Bewegungsrichtung (DM) und Auswählen (44) einer Option, die der detektierten Position entspricht, umfasst.

12. Verfahren nach Anspruch 11, wobei das Detektieren einer von einem Benutzer vorgenommenen Optionsauswahl Detektieren einer ersten Art von Betätigung, Messen (32) der Zeit der ersten Art von Betätigung, Vergleichen (34) der Zeit mit einem Informationsdarstellungsschwellenwert, Auswählen eines Projizierens (40) der Informationen, wenn der Schwellenwert überschritten (36) wird, und andernfalls Auswählen (38) der Atmosphärenbasisfunktion des manövrierbaren Betätigungselements umfasst.

13. Verfahren nach Anspruch 11 oder 12, wobei das manövrierbare Betätigungselement (14) elektrisch und/oder drahtlos mit dem Projektorgehäuse verbunden werden kann, wobei das Verfahren ferner Detektieren (52) einer Art von Verbindung zwischen dem manövrierbaren Betätigungselement (14) und dem Projektorgehäuse (20) und nur (58) Projizieren von Informationen, wenn (54) eine elektrische Verbindung besteht, und ansonsten nur Bereitstellen der Atmosphärenbasisfunktion umfasst.

14. Computerprogrammprodukt zum Projizieren von Informationen, die mit einem manövrierbaren Betätigungselement (16) einer Raumatmosphärenhandhabungsanordnung (14) in einem Gebäudeautomatisierungssystem assoziiert sind, wobei die Raumatmosphärenhandhabungsanordnung (14) ein Projektorgehäuse (20) auf der Informationsprojektionsfläche (18) umfasst und wobei das manövrierbare Betätigungselement (16) betätigt werden kann, um eine Atmosphärenbasisfunktion zu aktivieren, und entlang einer Bewegungsrichtung (DM) über der Informationsprojektionsfläche (18) beweglich ist, wobei das Computerprogrammprodukt einen Computerprogrammcode (62) umfasst, der, wenn er in einer Steuereinheit (26) der Raumatmosphärenhandhabungsanordnung (14) ausgeführt wird, die Steuereinheit (26) zu Folgendem veranlasst:
Detektieren einer von einem Benutzer vorgenommenen Optionsauswahlbetätigung des manövrierbaren Betätigungselements (16), und
Steuern, basierend auf der Detektion, des mindestens einen Projektors (22, 24), um Informationen auf die Informationsprojektionsfläche (18) zu projizieren, die mit der Bewegungsrichtung (DM) des manövrierbaren Betätigungselements ausgerichtet ist,
wobei die Steuereinheit (26) beim Steuern des mindestens einen Projektors (22, 24), um Informationen zu projizieren, ferner dazu veranlasst wird, Informationen über eine Anzahl von Aktuatoroptionen (O1, O2, O3, O4, O5) darzustellen, die Position des Betätigungselements (16) entlang der Bewegungsrichtung (DM) zu detektieren und eine Option auszuwählen, die der detektierten Position entspricht.

## Revendications

1. Agencement de manipulation d'atmosphère ambiante (14) destiné à être fourni dans un système d'automatisation de bâtiment, l'agencement comprenant :
un élément d'actionnement manœuvrable (16) pour influencer l'atmosphère d'une pièce (10) et pouvant être actionné pour activer une fonction d'atmosphère de base et mobile le long d'une direction de déplacement (DM) au-dessus d'une surface de projection d'informations (18),
un boîtier de projecteur (20) au-dessus de la surface de projection d'informations (18) et comprenant au moins un projecteur (22, 24), et
une unité de commande (26) configurée pour détecter un actionnement de sélection d'options effectuée par un utilisateur de l'élément d'actionnement manœuvrable (16) et commander, sur la base de ladite détection, l'au moins un projecteur (22, 24) pour projeter des informations sur la surface de projection d'informations (18) alignée avec la direction de déplacement (DM) de l'élément d'actionnement manœuvrable, **caractérisé en ce que** l'unité de commande (26) lors de la commande dudit au moins un projecteur (22, 24) pour projeter des informations est en outre configurée pour présenter des informations sur un nombre d'options d'actionneur (O1, O2, O3, O4, O5), détecter la position de l'élément d'actionnement (16) le long de la direction de déplacement (DM) et sélectionner une option correspondant à la position détectée.

2. Agencement de manipulation d'atmosphère ambiante (14) selon la revendication 1, dans lequel le boîtier de projecteur (20) a une au moins une paroi latérale perpendiculaire à la surface de projection (18), et ledit au moins un projecteur (22, 24) est configuré pour projeter les informations à travers ladite au moins une paroi latérale.

3. Agencement de manipulation d'atmosphère ambiante (14) selon l'une quelconque des revendications précédentes, dans lequel l'élément d'actionnement manœuvrable (14) est un commutateur.

4. Agencement de manipulation d'atmosphère ambiante (14) selon l'une quelconque des revendications précédentes, dans lequel l'unité de commande (26), lors de la détection d'une sélection d'options effectuée par un utilisateur, est configurée pour détecter un premier type d'actionnement, mesurer le temps du premier type d'actionnement, comparer le temps à un seuil de présentation d'informations et sélectionner de projeter lesdites informations si le seuil est franchi et sinon sélectionner la fonction d'atmosphère de base.

5. Agencement de manipulation d'atmosphère ambiante (14) selon l'une quelconque des revendications précédentes, dans lequel la direction est radiale et l'unité de commande (26) est configurée pour commander l'au moins un projecteur (22, 24) pour projeter lesdites informations sur la surface de projection (18) autour de l'élément d'actionnement manœuvrable (16).

6. Agencement de manipulation d'atmosphère ambiante (14) selon l'une quelconque des revendications 1 à 4, dans lequel l'élément d'actionnement manœuvrable (16) est mobile le long d'un trajet axial (P) et l'unité de commande (26) est configurée pour commander l'au moins un projecteur (22, 24) pour projeter lesdites informations sur la surface de projection (18) en parallèle avec le trajet axial (P).

7. Agencement de manipulation d'atmosphère ambiante (14) selon l'une quelconque des revendications précédentes, dans lequel l'élément d'actionnement manœuvrable (16) est fixé de manière fixe au boîtier de projecteur.

8. Agencement de manipulation d'atmosphère ambiante (14) selon l'une quelconque des revendications 1 à 6, dans lequel l'élément d'actionnement manœuvrable (16) est fourni dans un premier boîtier (50) comprenant un premier connecteur mécanique (C1a, C1b), où le boîtier de projecteur (20) forme un second boîtier comprenant un second connecteur mécanique (C2a, C2b) qui peut être accouplé au premier connecteur mécanique (C1a, C1b) pour former un boîtier combiné.

9. Agencement de manipulation d'atmosphère ambiante selon la revendication 8, dans lequel le premier boîtier (50) comprend une première interface sans fil (WI1) et une première interface électrique (EI1) et le second boîtier comprend une seconde interface sans fil (WI2) et une seconde interface électrique (EI2), où les première et seconde interfaces électriques forment une connexion électrique lorsque les connecteurs mécaniques (C1a, C1b C2a, C2b) sont accouplés, et l'unité de commande (26) est uniquement configurée pour fournir les informations à projeter s'il est détecté que les première et seconde interfaces électriques (EI1, EI2) sont électriquement connectées et sinon pour fournir uniquement la fonction d'atmosphère de base.

10. Système d'automatisation de bâtiment comprenant un agencement de manipulation d'atmosphère ambiante (14) selon l'une quelconque des revendications précédentes.

11. Procédé de projection d'informations associées à un élément d'actionnement manœuvrable (16) d'un agencement de manipulation d'atmosphère ambiante (14) dans un système d'automatisation de bâtiment, l'agencement de manipulation d'atmosphère ambiante (14) comprenant un boîtier de projecteur (20) au-dessus d'une surface de projection d'informations (18) et où l'élément d'actionnement manœuvrable (16) peut être actionné pour activer une fonction d'atmosphère de base et est mobile le long d'une direction de déplacement (DM) au-dessus de la surface de projection d'informations (18), le procédé étant réalisé dans une unité de commande (26) de l'agencement de manipulation d'atmosphère ambiante (14) et comprenant les étapes suivantes :
la détection (30, 32, 34) d'un actionnement de sélection d'options effectuée par un utilisateur de l'élément d'actionnement manœuvrable (16), et
la commande (40), sur la base de ladite détection, de l'au moins un projecteur (22, 24) pour projeter des informations sur la surface de projection d'informations (18) alignée avec la direction de déplacement (DM) de l'élément d'actionnement manœuvrable, **caractérisé en ce que** la commande dudit au moins un projecteur (22, 24) pour projeter des informations comprend la présentation d'informations sur un nombre d'options d'actionneur (O1, O2, O3, O4, O5) et comprenant en outre la détection (42) de la position de l'élément d'actionnement (16) le long de la direction de déplacement (DM) et la sélection (44) d'une option correspondant à la position détectée.

12. Procédé selon la revendication 11, dans lequel la détection d'une sélection d'options effectuée par un utilisateur comprend la détection d'un premier type d'actionnement, la mesure (32) du temps du premier type d'actionnement, la comparaison (34) du temps avec un seuil de présentation d'informations, la sélection de la projection (40) desdites informations si le seuil est franchi (36) et sinon la sélection (38) de la fonction d'atmosphère de base de l'élément d'actionnement manœuvrable.

13. Procédé selon la revendication 11 ou 12, dans lequel l'élément d'actionnement manœuvrable (14) peut être connecté électriquement et/ou sans fil au boîtier de projecteur, le procédé comprenant en outre la détection (52) d'un type de connexion entre l'élément d'actionnement manœuvrable (14) et le boîtier de projecteur (20) et uniquement (58) la projection d'informations si (54) il y a une connexion électrique et sinon pour fournir uniquement la fonction d'atmosphère de base.

14. Produit programme informatique pour projeter des informations associées à un élément d'actionnement manœuvrable (16) d'un agencement de manipulation d'atmosphère ambiante (14) dans un système d'automatisation de bâtiment, l'agencement de manipulation d'atmosphère ambiante (14) comprenant un boîtier de projecteur (20) au-dessus de la surface de projection d'informations (18) et où l'élément d'actionnement manœuvrable (16) peut être actionné pour activer une fonction d'atmosphère de base et est mobile le long d'une direction de déplacement (DM) au-dessus de la surface de projection d'informations (18), le produit programme informatique comprenant du code de programme informatique (62) qui, lorsqu'il est exécuté dans une unité de commande (26) de l'agencement de manipulation d'atmosphère ambiante (14), amène l'unité de commande (26) à :
détecter un actionnement de sélection d'options effectuée par un utilisateur de l'élément d'actionnement manœuvrable (16), et
commander, sur la base de ladite détection, l'au moins un projecteur (22, 24) pour projeter des informations sur la surface de projection d'informations (18) alignée avec la direction de déplacement (DM) de l'élément d'actionnement manœuvrable,
dans lequel l'unité de commande (26), lors de la commande dudit au moins un projecteur (22, 24) pour projeter des informations, est en outre amenée à présenter des informations sur un nombre d'options d'actionneur (O1, O2, O3, O4, O5), détecter la position de l'élément d'actionnement (16) le long de la direction de déplacement (DM) et sélectionner une option correspondant à la position détectée.
